# EUROPEAN PATENT SPECIFICATION

(11) **EP 4 177 563 B1**
(45) Date of publication and mention of the grant of the patent: **31.07.2024**
(21) Application number: 21207233.4
(22) Date of filing: 09.11.2021
(51) Int. Cl.: F41H 3/00, F41H 3/02, G02B 26/00

(54) **DEVICES FOR CONTROLLING REFLECTION AND/OR REDUCING OBSERVABILITY, AND AIRCRAFT OR SPACECRAFT**
VORRICHTUNGEN ZUR STEUERUNG VON REFLEXION UND/ODER ZUR REDUZIERUNG BEOBACHTBARKEIT SOWIE FLUGZEUG ODER RAUMFAHRZEUG
DISPOSITIFS PERMETTANT DE CONTRÔLER LA RÉFLEXION ET/OU DE RÉDUIRE L'OBSERVABILITÉ ET AÉRONEF OU ENGIN SPATIAL

(43) Date of publication of application: 10.05.2023
(73) Proprietor: AIRBUS S.A.S., 31700 Blagnac Cedex (FR)
(72) Inventor: LENCZOWSKI, Blanka, 82024 Taufkirchen (DE); COMIN, Alberto, 82024 Taufkirchen (DE)
(74) Representative: Isarpatent

(56) References cited:
- WO-A1-2016/160588
- WO-A1-2020/037261
- WO-A1-2021/236780
- CN-A- 110 285 712
- US-A- 3 481 663
- US-A1- 2018 142 992

## Description

### FIELD OF THE INVENTION

The invention relates to a device for controlling reflection of incident electromagnetic radiation depending on the wavelength thereof by an object, to a device for reducing the observability of an object or at least part thereof, and to an aircraft or spacecraft. Furthermore, the invention also relates to a method for controlling reflection of incident electromagnetic radiation and/or reducing the observability of an object or at least a part thereof.

### TECHNICAL BACKGROUND

Although the invention may be useful in connection with any platform, object, or setup which needs camouflage, and may also be generally useful in any application that involves displaying a static or dynamically changing pattern, image or colour, the invention and the underlying problem will be described in the following in exemplary manner with reference to camouflaging a movable platform such as an aircraft or vehicle, e.g. an aeroplane, helicopter, tank, truck, ship or boat, but without limiting the invention to that effect.

Conventionally, in order to provide camouflage, the platform may be painted or a coating may be attached thereto, with the pattern and color(s) of the painting or coating being chosen so as to be suitable for a predefined operation scenario. When the operation scenario changes, the conventional camouflage painting or coating has to be changed. Furthermore, such conventional paintings or coatings may be more or less effective depending on the time of the day and/or on the illumination conditions.

It is known that in a number of species in the animal and plant kingdoms, the perceived color or color(s) of the individual is not or not only due to pigment, but involves so-called structural coloration, which relies on small-sized, microscopic structures able to produce diffraction and/or interference effects. In structural coloration, some spectral components of light may for example be reflected back to the observer, while the reflection of other spectral components is reduced or suppressed, thereby influencing the perceived colour.

It has already been suggested that the principle of structural coloration may be used in industrial or military technology, for example to implement adaptive camouflage, as for instance described in CN110285712 A. Moreover, in Y. Deng, S. Gao, J. Liu, U. Gohs, E. Mäder and G. Heinrich, Variable structural colouration of composite interphase, Mater. Horiz., 2017, DOI: 10.1039/ C6MH00559D, it has been suggested to use variable structural colouration in connection with identifying nanoscale mechanical deformation in composite interphases. The approach to structural coloration described in this article uses overlapping graphene nanoplatelets and exploits the change in spatial overlap between these graphene flakes for detecting bendings and cracks on surfaces.

### SUMMARY OF THE INVENTION

In view of the above, a problem to be solved by the present invention is to provide an improved way of camouflaging or reducing the observability of an object, which is effective and can be implemented in an efficient manner, for example also when applied to a large object such as an aeroplane. In particular, a dynamic and flexible replacement for conventional mimetic painting and/or camouflage add-ons is to be provided.

According to the invention, the problem outlined above is solved by a device comprising the features of claim 1 and/or by a device comprising the features of claim 3 and/or by an aircraft or spacecraft comprising the features of claim 13.

Accordingly, the invention provides a device for controlling reflection of incident electromagnetic radiation depending on the wavelength thereof by an object, in particular to thereby camouflage the object at least in part. The device comprises a coating on the object, wherein the coating includes an active layer containing a multitude of small-sized structures capable of producing wavelength-dependent diffraction and/or interference of electromagnetic radiation. Furthermore, the device is configured in such a manner that, depending on one or more control signals, an arrangement of the small-sized structures relative to each other can be varied.

Moreover, the invention proposes a device for reducing the observability of an object or at least part thereof in an infrared range of electromagnetic radiation. The device comprises a coating on the object, wherein the coating includes an active layer containing a multitude of small-sized structures capable of producing wavelength-dependent diffraction and/or interference of electromagnetic radiation, and wherein the device is configured in such a manner that, depending on one or more control signals, an arrangement of the small-sized structures relative to each other can be varied.

Furthermore, according to the invention, an aircraft or spacecraft which comprises a coating provided on an outer surface of the aircraft or spacecraft is proposed, wherein the coating includes a layer containing a multitude of small-sized structures capable of producing wavelength-dependent diffraction and/or interference of electromagnetic radiation, wherein an arrangement of the small-sized structures relative to each other is variable depending on one or more control signals.

There is further disclosed herein a method of controlling reflection of incident electromagnetic radiation depending on the wavelength thereof by an object, in particular to thereby camouflage the object at least in part, and/or of reducing the observability of an object or at least part thereof in an infrared range of electromagnetic radiation, wherein the method comprises:
- providing a device including a coating on the object, wherein the coating includes an active layer containing a multitude of small-sized structures capable of producing wavelength-dependent diffraction and/or interference of electromagnetic radiation; and
- varying, depending on one or more control signals, an arrangement of the small-sized structures relative to each other.

An idea underlying the invention is to provide an active coating that can change, for example, the colour or colour pattern of the object, or generally an appearance of the object e.g. in a selected range of wavelengths of electromagnetic radiation, and in particular to provide a way of doing so dynamically and quickly. The selected range may, for example, encompass a visible or infrared range or both. Further, with the present invention, this change in appearance may in particular be accomplished, if desired, with high spatial resolution. In this manner, patterns may also be displayed for example, using the proposed devices.

For instance, an advantage of the invention, with respect to standard camouflage painting, is the possibility afforded by the invention of controlling the perceived colour or appearance of the object, in particular locally and dynamically.

An advantage of the invention with respect to static mimetic coatings is the possibility of adapting the appearance, e.g. colour, to mimic the background and reduce the visibility of the coated object. As the invention makes it possible to vary the appearance of the object dynamically and rapidly, even objects moving fast, or flying, can be provided with efficient mimetic capabilites. In this way, the invention makes it possible to improve an object, in particular a vehicle, in terms of effective and efficient biomimicry.

Advantageous improvements and developments of the invention are contained in the dependent claims as well as in the description referring to the drawings.

In a development the device is configured for controlling the reflection of incident electromagnetic radiation in a visible range of wavelengths or in a visible and near-infrared range of wavelengths, in order to thereby change a perceived color of the object or part thereof based on the one or more control signals, in particular to thereby change the perceived color locally and dynamically. In this manner, the observability of the object especially under daylight conditions may be significantly reduced by changing the perceived colour thereof, in particular based on a momentary background against which the object may be viewed.

According to a development, reducing the observability of the object or at least part thereof in the infrared range comprises reducing the observability of the object or at least part thereof in a mid-infrared range of wavelengths. This may contribute to preventing discovery of the object based on a pattern it displays in the infrared range, even in the dark, due to specific spots of elevated temperature that the object may exhibit. For example, the device can be used to mask hot spots in the emitted thermal radiation.

According to a development, the small-sized structures are flake-like elements, the active layer comprises a matrix material, in particular a polymer, and the flake-like elements are embedded in the matrix material. A device including such an active layer may be energy-efficient as well as thin, and thus, weight added to the object by the presence of the device is small. Thin, flake-like elements may further contribute to an efficient application of the coating.

In some developments, the flake-like elements may preferably be formed as flakes of a thin material having suitable reflectivity. For the flake-like elements, it may be preferable to use a material which can be exfoliated as very thin layers having reflectivity.

In a preferred development, the small-sized structures are graphene flakes. Graphene may be advantageous due to its quite flat optical response, i.e. an optical response which is relatively uniform at least within an interesting part of the spectrum.

According to an alternative development, the small-sized structures may be silicene flakes.

In particular, the device may be configured to vary the relative arrangement of the flake-like elements, depending on the one or more control signals, so as to vary an overlap of adjacent ones of the flake-like elements. This may afford a relatively simple way of controlling the relative arrangement of the small-sized structures.

In line with a further development, the device includes a plurality of actuating elements configured to locally vary the relative arrangement of the small-sized structures in different regions of the coating depending on the one or more control signals, in particular to thereby control one or more dielectric and/or optical properties of the active layer in each of the regions of the coating. Preferably, the actuating elements are arranged according to an ordered pattern, array or tiling. In this way, the device makes it possible to change the appearance or the perceived colour of the object independently in different portions of the object. Also, it can be envisaged to provide the pattern, array or tiling formed with the actuating elements with a resolution adapted to displaying patterns, symbols or even text or images if desired. In particular, each of the actuating elements may correspond to a pixel of a pixel array. In some developments, the actuating elements may be configured with a substantially flat, rectangular or square shape and may, in particular, be disposed in accordance with a checkerboard pattern. In other developments, actuating elements having a shape different from a rectangle or square can be envisaged, for example hexagon-shaped or triangle-shaped actuating elements.

According to the invention, the device comprises an actuating layer disposed beneath the active layer. The actuating layer comprises an elastomer or a piezoceramic material, the active layer being mechanically coupled to the elastomer or to the piezoceramic material. This can provide an efficient way of controlling the arrangement of the small-sized structures. Also, the thickness of the device can be kept limited, which may facilitate applying the device on an outside of an object such as an aircraft, for instance, which may comprise a surface of carefully designed shape that preferably should not be detrimentally affected by the presence of the device.

The actuating layer may in a development be formed as an arrangement disposed beneath the coating or may be part of the coating.

In a development, the actuating layer comprises a plurality of individually controllable actuating elements. In particular, each of the actuating elements is formed with a portion of the elastomer or is embedded in the elastomer or is formed with a portion of the piezoceramic material.

According to a development, the actuating layer or actuating element(s) may be configured to deform in response to an applied electrical signal.

According to a development, the coating further comprises an interface layer adapted to improve adhesion between the matrix material of the active layer and the actuating layer. Appropriate adhesive force acting between these layers can thereby be achieved, which may contribute to improving the reliability and durability of the coating and the device.

In accordance with a further improvement, the small-sized structures are each connected to the actuating layer or to the interface layer, arranged between the active layer and the actuating layer, by one or more binding molecules, wherein a binding molecule extends from an associated one of the small-sized structures within the active layer to the actuating layer or the interface layer. In this manner, the flake-like elements, for example, may be bound directly to the actuating or interface layer. Using the binding molecules, the matrix material of the active layer can be very soft and may not need to follow the movements of the actuating layer and/or of the interface layer. Accordingly, by using the binding molecules, the arrangement of the small-sized structures can be changed in a more direct manner, and the arrangement of the small-sized structures can respond more precisely and more quickly to the control signal(s) applied.

In particular, the binding molecules are distinct from the matrix material of the active layer. For example, as the binding molecule extends from the small-sized structure to the actuating or interface layer, it may be partially surrounded by the matrix material of the active layer and may be embedded therein. In particular, the binding molecules can establish a direct mechanical connection between the small-sized structures and the actuating or interface layer while extending through a very soft matrix.

In an alternative development, the matrix material of the active layer is chosen such as to be soft enough to enable the small-sized structures, e.g. the flake-like elements embedded in the matrix material, to move and in particular to allow the overlap thereof to vary, but also cohesive enough to follow a mechanical deformation within the actuating layer, e.g. a deformation of the elastomer or piezoceramic. In this manner, a simplification may be achieved through omission of additional binding molecules.

In a development, the active layer contains controllable actuating elements. In particular, the controllable actuating elements are in this case embedded in the matrix material of the active layer. Such controllable actuating elements may, for example, include carbon nanotubes. Accordingly, a separate actuating layer can be dispensed with, which can contribute to a further simplication and to a thin coating.

In particular, the coating may, in some developments, contain actuating elements which may be used to stretch or compress the coating.

According to a further improvement, the device is adapted to provide one or more monitoring signals that are useable or that can be processed to provide data useable in monitoring structural health of the object.

In particular, the device may be configured to sense a deformation of the object or part thereof. In a development, the device may be configured to sense strain or mechanical deformation to which the object or part thereof is subjected. The strain or deformation may be caused by external or body forces. For instance, the strain may be caused by inertial or aerodynamic forces acting on portions of the object during motion of the object, or may be caused by changes in temperature as thermal expansion or contraction. For example, sensed strain or deformation can be used as a monitoring signal for structural health monitoring of the object. The device can hence be provided with a further useful function.

In an advantageous development, the device is configured to compensate a variation of the arrangement of the small-sized structures relative to each other that is caused by a deformation of the object or part thereof by adapting the one or more control signals. External forces, body forces or changes in temperature can result in deformations of the object or the part thereof which may at least partially transmit to the coating applied, and to the active layer containing the small-sized structures. Thereby, a change in appearance of perceived colour could result, at least locally. According to this development, the deformation can be considered a perturbation that is compensated by appropriately adapting the control signal(s), in particular to control reflection of incident radiation as targeted.

In a development, the device is configured to compensate a variation of external electromagnetic radiation incident on the coating, in particular a variation of external illumination of the coating, by adapting the one or more control signals.

According to a development, the device comprises a sensing device that is adapted to sense the external electromagnetic radiation incident on the coating, in particular the external illumination of the coating, more particularly is adapted to detect a brightness and/or a spectral intensity of incident light illuminating the coating, and further is adapted to provide at least one sensor signal based on the sensed external radiation. According to this development, a processing and control device is configured to provide the at least one control signal in such a manner as to modify the perceived appearance, e.g. the color(s), of the coating on the basis of the sensed external illumination.

In a further development, the device comprises a buffer layer for partially decoupling the active layer from the object with respect to mechanical deformation, in particular essentially decoupling the active layer from the object with regard to mechanical vibration with a pre-defined frequency range, the buffer layer being arranged beneath the active layer or beneath the actuating layer. This may help to reduce the effort to be made for compensating perturbations that influence the arrangement of small-sized structures by correcting or adapting the control signal(s).

According to an improvement, the coating further comprises at least one protective layer arranged on an outer side of the active layer. In particular, the protective layer may be transparent. In this manner, protection of the other layers of the coating from environmental conditions can be provided. This may be particularly useful in the case of objects moving under comparatively harsh conditions, such as aircraft or spacecraft, but also may be advantageous in the case of any other object, especially those used outdoors.

In particular, according to some developments, the object is an aircraft or spacecraft, for example an airplane or a helicopter, or a land vehicle, for example a tank or truck, or a water vehicle, for example a ship or a boat. According to alternative developments, the object may be any other vehicle, or the object may be a fixed structure or setup, such as a building, for example.

According to an improvement of the aircraft or spacecraft, the aircraft or spacecraft further comprises at least one first sensing device and a processing and control device, wherein the first sensing device is configured to receive electromagnetic radiation incident on a first side of the aircraft or spacecraft at least within a range of wavelengths and to provide at least one sensor signal dependent on the radiation received, and wherein the processing and control device is configured to receive the at least one sensor signal from the first sensing device and to provide the control signal dependent on the received sensor signal. Further, at least a part of the coating is disposed on a second side of the aircraft or spacecraft that is different from the first side. In particular, the second side is substantially opposite the first side.

In a development, a second sensing device is provided, which is adapted to sense an external electromagnetic radiation incident on the aircraft or spacecraft, in particular an external illumination of the aircraft or spacecraft, and for example is adapted to detect a brightness and/or a spectral intensity of incident light illuminating the aircraft or spacecraft, and further is adapted to provide at least one sensor signal based on the sensed external incident radiation or illumination. According to this development, the processing and control device is configured to provide the at least one control signal in such a manner as to modify the perceived appearance or color of the aircraft or spacecraft within portions thereof comprising the coating on the basis of the sensed external incident radiation or illumination. In particular, the second sensing device can be configured to detect the external incident radiation or illumination on one or more portions of the aircraft or spacecraft comprising the coating.

According to a development, the coating may be applied to substantially an entire part of the surface of the object visible when viewed from the first side. Alternatively, the coating may be applied substantially to the entire outer surface of the object.

For example, in embodiments in which the object is an aircraft, the coating may be applied to an entire underside of the aircraft, with the underside corresponding to the second side thereof. Alternatively, the coating may be applied to the entire surface of the aircraft.

In a further development, the coating may be applied in the region of a hot spot, where thermal radiation emitted by the object is expected to be significantly increased relative to an adjacent region. This can be sufficient to mask the hot spot and effectively reduce the observability of the object.

In a development, the method includes performing a calibration procedure in order to determine control signals yielding a pre-defined perceived appearance of the object in the visible and/or infrared range of wavelengths.

In a further development, the method includes detecting an external electromagnetic radiation incident on the object, in particular an illumination of the object, in particular by detecting a brightness and/or a spectral intensity of incident light illuminating the object, and further includes providing the one or more control signal(s) in such a manner as to modify the perceived appearance of the object on the basis of the detected external incident radiation or illumination.

According to a development, the method includes generating the one or more control signals in such a manner as to provide the object with an observable pattern adapted to prevent recognition of the object by a machine vision algorithm and/or to modify a classification of the object by a classification algorithm. Accordingly, with respect to automated object detection, creating such a specific pattern could confuse a machine vision algorithm to the extent that the object is either not recognized or misclassified.

In a further development, the method includes generating the one or more control signals in such a manner as to display, using the device, a symbol, an image or a text, wherein the symbol, image or text may be static or may change over time.

The devices and the method for controlling reflection and/or reducing observability disclosed herein may also be useful for other applications, in particular to implement improved display devices for a variety of purposes other than camouflage.

The improvements, enhancements and developments of the present invention may be arbitrarily combined with each other whenever this makes sense. Moreover, other possible enhancements, implementations and developments of the present invention comprise combinations of features of the invention which have been described above or will be described in the following in relation to the detailed description of embodiments, even where such a combination has not been expressly mentioned.

In particular, the improvements, enhancements and developments of the invention described above may be applied in analogous manner to each of the devices, the aircraft or spacecraft and the method proposed herein. The devices proposed above can be implemented in the proposed aircraft or spacecraft.

### BRIEF DESCRIPTION OF THE DRAWINGS

The invention will be explained in the following with reference to the schematic figures of the drawings which illustrate embodiments of the invention. Herein:
- Fig. 1: displays a side view of an exemplary aircraft according to embodiments of the invention, in a schematic manner;
- Fig. 2: schematically shows a device according to an embodiment of the invention, in schematic and partially exploded perspective manner;
- Fig. 3: schematically illustrates functional relationships of various elements of a device of an embodiment of the invention, with electrical signals and mechanical couplings being schematically indicated;
- Fig. 4: displays a schematic sectional view through part of a device according to an embodiment;
- Fig. 5: displays a schematic sectional view through part of a device according to another embodiment; and
- Fig. 6: illustrates a perspective view of some components of a device according to a further embodiment.

The enclosed drawings are intended to illustrate embodiments of the invention so that the invention may be further understood. The drawings, in conjunction with the description, are intended to explain principles and concepts of the invention. Other embodiments and many of the advantages described may be inferred from the drawings. Elements of the drawings are not necessarily drawn to scale.

Elements, features and components which are identical or which have the same function or effect have been labeled in the drawings using the same reference signs, except where explicitely stated otherwise.

### DETAILED DESCRIPTION OF EMBODIMENTS

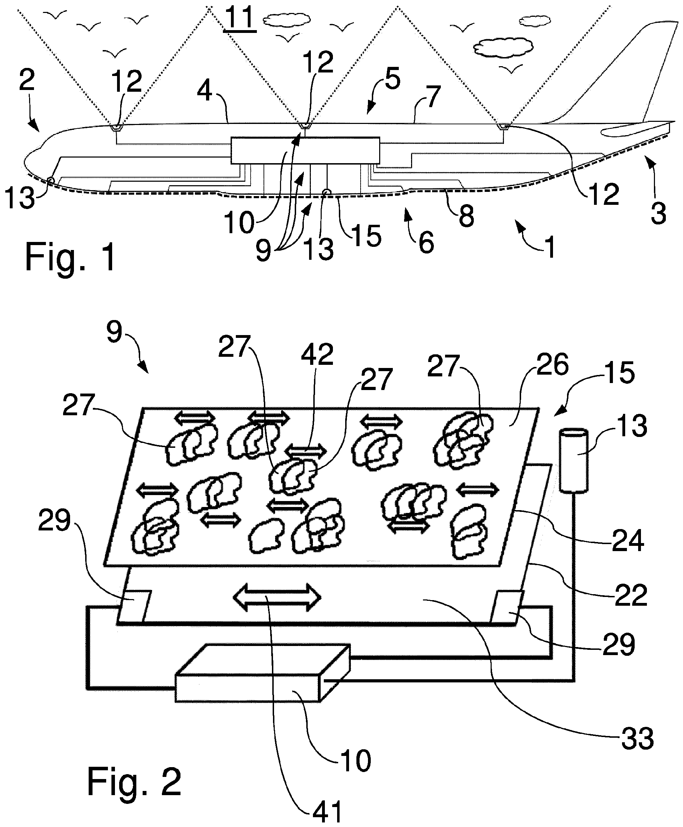

In Fig. 1, an aircraft 1 configured as an aeroplane is displayed. An embodiment of the invention is implemented in the aircraft 1. The aircraft 1 comprises a nose 2, an empennage 3, a fuselage 4 as well as wings and engines, wherein the latter are not explicitely shown in Fig. 1. An outer surface of the aircraft 1 includes a lower surface portion 8, which can be observed by an observer placed below the aircraft 1, and an upper surface portion 7. The upper surface portion 7 is defined on a first, upper side 5 of the aircraft 1, and the lower surface portion 8 is defined on a second, lower side 6 of the aircraft 1 opposite the upper side 5.

Fig. 1 shows the aircraft 1 in exemplary manner in level flight, in order to illustrate the arrangement of various components of the invention and the functioning thereof. Yet, it should be noted that the invention is not limited to the flight situation displayed. The terms "upper side", "upper surface", "lower side" and "lower surface", for example, are defined with respect to the orientation of the aircraft 1 in Fig. 1 and for purposes of illustration. As will become apparent below, the first and second sides 5, 6 may advantageously be upper and lower sides, but could also be sides of the aircraft 1 different from the upper and lower sides in other useful implementations.

The aircraft 1 of Fig. 1 is provided with a device 9 for camouflaging the aircraft 1 and thereby reducing its observability. The device 9 comprises a coating 15 disposed on the second, lower side 6 of the aircraft 1. The coating 15 preferably extends across substantially the entire surface portion 8 of the aircraft 1 on the lower side 6, and hence preferably is disposed on a lower surface of the fuselage 4 as well as on lower surfaces of each of the wings, engines and elevator.

The device 9 further comprises a plurality of first sensing devices 12 which are arranged on the first, upper side 5 of the aircraft 1. Each first sensing device 12 may be configured as an image acquisition device, adapted to capture an image of at least a part of a background 11 against which the aircraft 1 is observed by an observer on the ground, not shown in Fig. 1. The background 11 may for example include various features, e.g. clouds, schematically indicated in Fig. 1 in exemplary manner. Alternatively, the first sensing devices 12 could each be implemented as a colour sensor. For example, each first sensing device 12 may comprise a spectrometer, e.g. a fibre-coupled spectrometer, or a set of several photo-detectors with different spectral filters.

The device 9 further comprises a processing and control device 10, schematically displayed in Fig. 1. Each of the first sensing devices 12 is coupled to the processing and control device 10. First sensor signals provided by the first sensing devices 12, in particular signals representing images or colour data captured by the first sensing devices 12, are received and processed by the processing and control device 10.

Additionally, the device 9 comprises a plurality of second sensing devices 13 which are provided on the second, lower side 6 of the aircraft 1, in proximity to the coating 15 or surrounded by the coating 15. The second sensing devices 13 are each adapted to sense an external illumination of the aircraft 1 on the lower side 6, by detecting brightness and/or spectral intensity of incident light illuminating the lower side 6 and thus the coating 15. Each of the second sensing devices 13 provides second sensor signals which are received by the processing and control device 10 as well. The second sensing devices 13 may in particular be configured as colour sensors, too. The second sensing device 13 may comprise a spectrometer, e.g. a fibre-coupled spectrometer, or a set of several photo-detectors with different spectral filters. Although the second sensing devices 13 are advantageous, they may be omitted in variants of the embodiment of Fig. 1.

Dependent at least on the received sensor signals from the first and second sensing devices 12, 13, the processing and control device 10 provides control signals that are supplied to the coating 15, as will be further explained below.

The device 9 is adapted to control the reflection of incident electromagnetic radiation depending on the wavelength thereof by the aircraft 1. A schematic and more detailed illustration of an exemplary embodiment of the device 9 used in Fig. 1 is displayed in Fig. 2, in which the first sensing device 12 is not displayed but may be present. The device 9 comprises the coating 15 on the lower side 6 of the aircraft 1, wherein the coating 15 includes an active layer 24 which in this embodiment is configured as a colour-changing top layer. The active layer 24 contains a multitude of small-sized structures 27. More specifically, the active layer 24 is formed as a composite film which contains thin flakes 27 of material which form the small-sized structures. In the embodiments of Figs. 2-6, the flakes 27 are partly overlapping graphene flakes. The active layer 24 further comprises a polymer as a matrix material 26, the overlapped graphene flakes 27 being embedded in the matrix material 26.

In variants of the embodiment, the flakes 27 may be flakes of another thin, substantially two-dimensional material, e.g. silicene flakes.

In Fig. 2, an actuating layer 22 is disposed as a bottom layer beneath the active top layer 24. The actuating layer 22 comprises an elastomer 33, but alternatively, the actuating layer 22 may comprise a piezoceramic material instead. Although in Fig. 2, the layers 22 and 24 are displayed spaced from each other for the sake of increased clarity, it is noted that in a completed and operable state of the device 9, the active layer 24 is mechanically coupled to the actuating layer 22, and more particularly is mechanically coupled to the elastomer 33 or to the piezoceramic material. The layers 22 and 24 can be adhesively connected to establish the mechanical coupling. Fig. 2 furthermore schematically shows connection locations 29 where control signals can be supplied to the actuator layer 22, using suitable conductors. Electric signals applied at the connection locations 29 can be used to induce stretching or bending of the actuator layer 22.

The device 9 in Figs. 1, 2 is configured for controlling the reflection of incident electromagnetic radiation in a visible range of wavelengths, i.e. the reflection of visible light, or in a visible and near-infrared range of wavelengths. Accordingly, the device 9 makes it possible to locally and dynamically change a perceived color of the active layer 24 on the basis of the control signals provided by the processing and control device 10.

For instance, during daylight conditions, electromagnetic radiation including electromagnetic radiation in the visible wavelength range, in other words visible light, hits the surface of the aircraft 1. Part of the indicent light is reflected, and the reflected light can be observed by an observer, not shown in the drawings. Based on the principle of structural coloration, the graphene flakes 27 are capable of producing multiple reflection, wavelength-dependent diffraction and/or interference of the electromagnetic radiation. Some spectral components are reflected back to the viewer based on constructive interference, while others are not, or to a lesser degree, due to cancellation by destructive interference. In particular, this has an influence on the reflected component of the light and on the perceived colour of the aircraft 1 on its lower surface portion 8, covered by the coating 15. In the device 9, the relative arrangement of graphene flakes 27 is not static but can be varied in a controlled manner, which makes it possible to controllably and dynamically modify the reflected component of the light, and thus the perceived colour. The mechanical displacement of the flakes 27 with respect to each other is brought about, in Fig. 2, using a controllable deformation 41 within the actuator layer 22, which will be described in more detail below.

Considering the visible range of wavelengths, the perceived color of the portion of the aircraft 1 where the active layer 24 is disposed on can be locally changed by moving the graphene flakes 27 relative to each other, depending on the control signals provided by the processing and control device 10, thereby changing the relative arrangement of the flakes 27 and in particular the overlap of adjacent flakes 27. In exemplary manner, Fig. 2 illustrates relative movement of the graphene flakes 27 which changes the overlap of adjacent ones by arrows 42.

The displacement of the graphene flakes 27 that is required to obtain the desired effect, i.e. the desired changes in perceived color, can be small. For example, the displacement occuring when the relative arrangement of graphene flakes 27 is varied may be approximately 10 µm or similar in order to obtain a desired colour change.

As the required changes of the arrangement of flakes 27 in the coating 15 are therefore relatively small, the coating 15 can in some embodiments be layered directly on top of the structure to be coated, in the case of Fig. 1 on the aircraft 1, for example the underside of its fuselage 4 and/or of its wings, nacelles or elevator. The device 9 accordingly can be implemented in an efficient manner.

In the aircraft 1 of Fig. 1, the coating 15 is implemented as a mimetic coating. During flight, the optical properties of the coating 15 in the visible and/or near infra-red range are changed as described above through variation of the overlap of the graphene flakes 27, using control signals generated by the processing and control device 10. In order to mimic the background 11, the processing and control device 10 may generate the control signals in such a manner that the perceived colour of the aircraft 1 on its lower surface portion 8, as observed by an observer viewing the lower side 6, substantially matches the colour of the background 11 as detected by the first sensor devices 12. In case the first sensor devices 12 can acquire images of the background 11 and the coating 15 is capable of displaying a pattern, as will be described below, the processing and control device 10 can provide control signals adapted to matching the pattern displayed by the coating 15 to the momentary pattern recorded for the background 11. Preferably, this is performed in real time, e.g. with an appropriate sampling rate.

The sensor signals obtained from the second sensing devices 13, which in particular provide information about the external illumination of the lower side 6 having the coating 15, preferably are also used by the processing and control device 10 when generating the control signals.

Generally, the colour of a surface depends on the external illumination. Usually, the illumination of the aircraft 1, for example the lower side 6 thereof on which the coating 15 is applied, changes in flight with time. An appropriate algorithm may be implemented in the device 10 enabling a correction or adaption of the control signals on the basis of the sensed external illumination, compensating for this effect. For further improved performance of the coating 15 and further improvement of the camouflaging effect, the optical properties of the coating 15 are adjusted dynamically as the illumination from the environment changes, using the signals obtained from light or color sensors such as the second sensing devices 13. In this manner, the dynamically adjusted perceived colour of the coating 15 can be matched to the background 11 in a further improved manner.

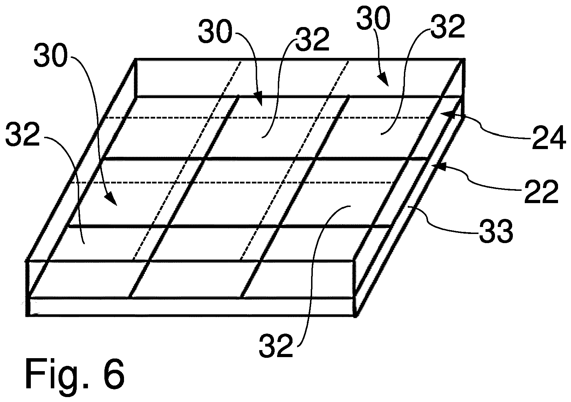

Fig. 6 illustrates an exemplary implementation of the actuating layer 22 which may be used, for instance, in the embodiments described herein with reference to Figs. 1-5. The actuating layer 22 comprises a plurality of individually controllable actuating elements 32, only a few of which are marked by a reference sign in Fig. 6. Fig. 6 shows that the elastomer 33, or the piezoceramic material, is partitioned in checkerboard manner into a plurality of square-shaped portions, from each of which one of the actuating elements 32 is formed. The portions of the elastomer, or the piezoceramic material, from which the actuating elements 32 are formed, are substantially flat relative to the wavelength of interest and the curvature of an underlying substrate 20, e.g. a skin of the aircraft. In particular, the requirements for flatness are more stringent for shorter wavelengths.

The portions of the active layer 24 and actuating layer 22 displayed in Fig. 2 may correspond to each of a plurality of substantially square-shaped regions 30 of the coating 15, a corresponding square shaped region of the active layer 24 in Fig. 6, and an associated actuating element 32 for each region 30.

In a variant of the implementation displayed in Fig. 6, the regions 30 might be hexagonal instead of square-shaped. In further variants, the coating 15 may comprise regions 30 of different shapes in combination, for example a combination of hexagonal, square and triangular regions 30, to obtain a different tessellation of the aircraft surface.

In a variant of the implementation displayed in Fig. 6, a plurality of actuating elements, not shown in detail in the Figures, may be embedded in the elastomer 33, in such a manner that one or more of these actuating elements is associated with and located in one of the regions 30 of the coating 15.

Each actuating element 32 can locally vary the relative arrangement of the graphene flakes 27 in one of the regions 30 of the coating 15, depending on the one or more control signals, to thereby control and locally change one or more dielectric and/or optical properties of the active layer 24 in each of the regions 30 of the coating 15, independently from the other regions 30. Each actuating element 32 can be supplied separately with control signals specifically provided for the actuating element 32, for example using conductors connected to each of the portions of the elastomer 33 in a manner analogous to Fig. 2.

In this way, it becomes possible to independently control the regions 30 of the coating 15. Accordingly, the coating 15 as a whole, or parts thereof, can be used in the manner of a pixel array to display a desired pattern or even a symbol or the like.

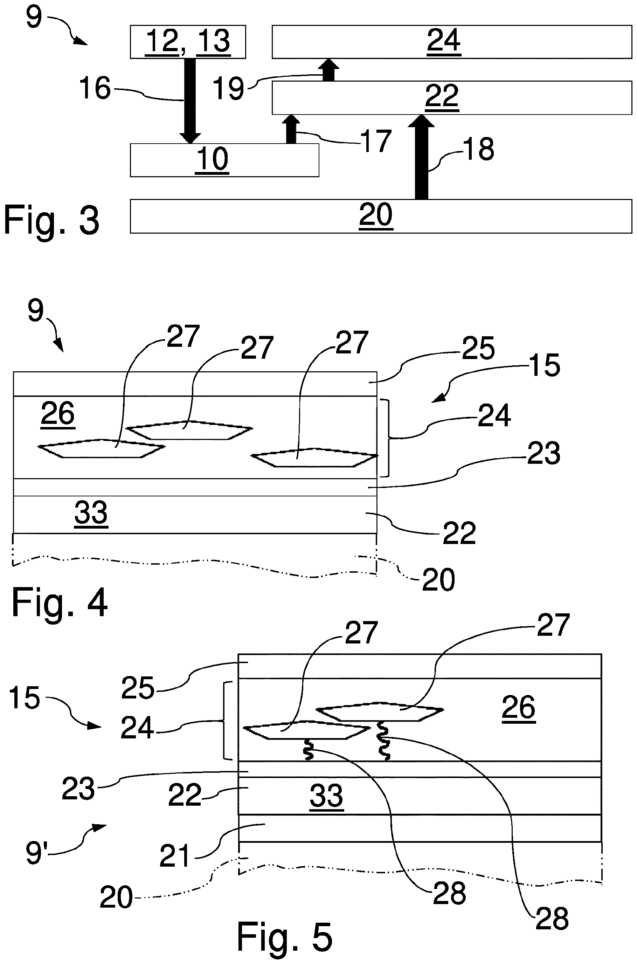

Fig. 3 schematically illustrates electrical signals transmitted between components of the device 9 by arrows 16, 17 and mechanical couplings of components of the device 9 by arrows 18, 19. In the exemplary diagram in Fig. 3, sensor signals 16 are transmitted from the first and second sensing devices 12, 13 to the processing and control device 10. Control signals 17 provided by the processing and control device 10 are transmitted to the actuating layer 22. The actuating layer 22 is mechanically coupled, directly or indirectly, to the substrate 20, which is a component, such as an outer skin, of the aircraft 1 of Fig. 1. This coupling is indicated by reference sign 18. Furthermore, the active layer 24 is mechanically coupled, directly or indirectly, to the actuating layer 22, as indicated by reference sign 19.

In order for the graphene flakes 27 to be movable in a controlled manner, the embodiments described herein include a mechanical coupling of the flakes 27 and those components effecting actuation, for example the actuating layer 22, e.g. the actuating elements 32 thereof.

An exemplary implementation of the mechanical coupling between the actuating layer 22 and the graphene flakes 27 is displayed in Fig. 4. The actuating layer 22 in Fig. 4 may include an elastomer 33 as described above.

The layer 24 can e.g. be laterally stretched or compressed and/or can be bent using the actuating layer 22. In Fig. 4, the graphene flakes 27 are embedded in the matrix material 26, e.g. a polymer. The matrix material 26 of Fig. 4 is soft enough to allow the flakes 27 to move around, but is also cohesive enough to follow the mechanical deformation of the elastomer 33. When the active layer 24 deforms, stretches or bends, it carries the graphene flakes 27 with it. For example, the layer 24 can bend downwards in Fig. 4 due to the action of the actuating layer 22 or its actuator element 32. As the layer 24 bends downwards, its surface area increases and so the average distance between the flakes 27 increases. Conversely, when the layer 24 bends upwards, the surface area decreases and the distance between the flakes 27 becomes shorter.

Fig. 4 also shows an interface layer 23 of the coating 15, which is optional and may in some embodiments be advantageous in order to improve the adhesion between the matrix material 26 of the active layer 24 and the elastomer 33 of the actuating layer 22.

An alternative implementation of the mechanical coupling of the graphene flakes 27 and the actuating layer 22 is schematically shown in Fig. 5 for a device 9' according to another embodiment, which may alternatively be implemented in the aircraft 1 of Fig. 1, instead of the device 9. Besides the differences described herein, the device 9' corresponds to the device 9.

In Fig. 5, the graphene flakes 27 are embedded in a very soft matrix material 26, which does not need to follow the mechanical deformation of the elastomer 33, and due to its soft nature is not capable of doing so, or only in a limited way. Hence, as the mechanical coupling between intended, controlled deformation in the actuating layer 22 and a movement of the flakes 27 via the matrix material 26 is weak or vanishes, a mechanical coupling for controllably moving the flakes 27 is accomplished in a different manner. In Fig. 5, the graphene flakes 27 are each directly bound to the interface layer 23 - or to the elastomer 33 of the actuating layer 22, if the interface layer 23 is absent - via binding molecules 28. The binding molecules 28 are different from the matrix material 26, and each of the molecules 28 extends from one of the graphene flakes 27 through the matrix material 26 to the interface layer 23, or alternatively to the actuating layer 22 if there is no interface layer 23.

In the implementation according to Fig. 5, constraints regarding the properties of the matrix material 26, in particular regarding softness and cohesiveness, can be relaxed, as the graphene flakes 27 are directly bound to the actuating layer 22 or to the interface layer 23, which helps to achieve a consistent displacement of the flakes 27 in response to an induced deformation in the layer 22.

On an outer surface of the active layer 24, which is turned towards the environment, an optical protective layer 25 of the coating 15 may be arranged in some embodiments, in order to protect the layers below from the outside environment, which in case of the aircraft 1 may be harsh. This is shown in exemplary manner in Figs. 4 and 5. Preferably, the protective layer 25 is transparent.

Only a few graphene flakes 27 are shown in Figs. 4, 5 for the sake of clarity, but it is understood that the active layer 24 contains many of these flakes 27.

In the embodiments described above with reference to Figs. 2-6, the active layer 24 which contains the flakes 27 is mechanically coupled to an additional actuating layer 22, e.g. formed with the elastomer 33 or piezoceramic. The layer 24 can be stretched or bent using a control signal, e.g. an electrical voltage signal, applied at the connection locations 29 of each actuating element 32.

In advantageous variants of the embodiments described herein, the device 9 or 9' is configured to sense a deformation of the substrate 20, being part of the aircraft 1, and to compensate a variation of the relative arrangement and overlap of the graphene flakes 27 that may be induced by the deformation of the underlying substrate 20. In order to do so, the detected deformation of the substrate 20 is provided to the processing and control device 10 in the form of one or more monitoring signals. The monitoring signals are then taken into account by the processing and control device 10 when generating the control signals for the actuating layer 22, which can be adapted or corrected on the basis of the deformation that has been detected. The deformation may be due to inertial or aerodynamic forces acting on portions of the aircraft 1, or to changes in temperature, for instance.

By adapting or correcting the control signals in the manner described, a change in the perceived colour, and thus a potential deviation thereof from an intended target colour, of the upper graphene composite layer 24 due to uncompensated effects of mechanical strain or deformation can be prevented.

More specifically, the actuating layer 22 and in particular the actuating elements 32 comprising the elastomer 33 or piezoceramic can additionally be used as sensor devices to detect the deformation or strain of the substrate 20. The elastomer 33 or the piezoceramic in such an implementation has an additional function as a sensor which can sense any externally generated strain or mechanical deformation.

Furthermore, the monitoring signals obtained by detecting the deformation or strain can be used for monitoring structural health of the aircraft 1, or the monitoring signals can be processed by the processing and control device 10 or by another processing unit to provide data that may then be used for such structural health monitoring.

The device 9, 9' hence can additionally either be used as just a deformation or strain sensing device or it can be used and configured to additionally enable active compensation for external perturbations due to time-dependent deformations of the substrate 20.

It is further conceivable to provide separate strain sensors, not explicitely shown in the drawings, as part of the aircraft 1 or of the device 9 or 9'. The separate strain sensors may detect deformation or strain and accordingly provide monitoring signals, instead of or in addition to monitoring signals obtained using the actuating elements 32 or the actuating layer 22. The monitoring signals provided by the separate strain sensors can be used to compensate mechanical deformations of the substrate 20 when the control signals for controlling the arrangement of flakes 27 are generated, in order to correctly obtain a target perceived colour, and/or may also contribute to structural health monitoring of the aircraft 1 if desired. However, it may be advantageous to use the actuating layer 22 or elements 32 for detecting deformation or strain, which can contribute to a simplification and may limit the number of components required.

In further embodiments, the actuating layer 22 can be omitted. In this case, a controllable deformation of the active layer 24, e.g. by laterally stretching or compressing the layer 24 or by bending the layer 24, is achieved using controllable actuating elements contained within the active layer 24. The controllable actuating elements can be embedded directly inside the matrix material 26 of the active layer 24. The controllable actuating elements embedded in the matrix 26 may be carbon nanotubes, for example. It may in this case be conceivable to use the embedded actuating elements as deformation sensors.

In the embodiments described above, the processing and control device 10 can be implemented as an external control unit for collecting input from the sensing devices, such as colour and strain sensors, for processing the data acquired and for generating an appropriate signal, e.g. voltage signal, to control the actuating elements 32. In this case, the processing and control device 10 is not part of the coating 15 but is installed in an appropriate location within the aircraft 1.

In variants of all embodiments described above, a buffer layer 21 can be arranged between the substrate 20, for example a skin of the aircraft 1, and the active layer 24. The buffer layer 21 can be arranged, for example, directly beneath the active layer 24 if a separate actuating layer 22 is absent. Alternatively, the buffer layer 21 can be arranged beneath the actuating layer 22, i.e. between the actuating layer 22 and the substrate 20. The buffer layer 21 makes it possible to partially decouple the active layer 24 from the substrate 20 of the object 1 with respect to mechanical deformation, in order to reduce the influence of deformation of the substrate 20 on the overlap of the graphene flakes 27 and hence on the functioning of the active layer 24. In particular, the buffer layer 21 can be adapted to substantially decouple the active layer 24 from the substrate 20 or object 1 with regard to mechanical vibration within a pre-defined frequency range. For example, the buffer layer 21 may dampen or eliminate the transmission of vibration within a range of comparatively high frequencies from the object 1 to the active layer 24. Thereby, the compensation described above, based on a detection of deformation or strain, may focus on mechanical deformations at low frequencies.

The embodiments described above, each of which can be implemented in the aircraft 1 of Fig. 1, provide an efficient and effective way of dynamically controlling the appearance of the aircraft 1 on the lower side 8 thereof. The coating 15 is in such an implementation used as a mimetic coating and enables the aircraft 1 to be camouflaged based on the idea of biomimicry, similar e.g. to the change in coloration of a chameleon. The appearance of the aircraft 1 on the lower side 8 is controlled in order to mimic the background 11. Images of the background 11, or color patterns corresponding to the background 11, are obtained in real time using the first sensor devices 12. In this manner, the visibility of the aircraft 1 against the background 11 is reduced via aircraft surface colour control. Tuning the color in real time provides mimetic capabilities for platforms moving fast or flying. Corrections based on the detection of ambient illumination and of mechanical deformation of the underlying substrate 20 contribute to achieve a reliable camouflage.

As an example, the perceived colour of the lower side 6 of the aircraft 1 could be dynamically adapted to the colour of the sky as background 11. In another example, if the aircraft 1 e.g. is on the ground, an area of the aircraft 1 close to the grass could be shaded in green, while another area of the aircraft 1 might be colored in brown.

It should be understood that the location of the coating 15 and of the first and second sensor devices 12, 13 in Fig. 1 is exemplary but may be modified. For example, in other embodiments, the entire outer surface of the aircraft 1 could be provided with the coating 15 and first and second sensor devices 12, 13 can be disposed on all sides of the aircraft 1, so as to enable very versatile camouflage.

It may be noted that the devices 9, 9' might additionally be used to display other patterns instead of a pattern representing an acquired background 11. For example, on appropriate occasions, a symbol, text, an image, a message and/or an advertisement may be displayed e.g. on the lower surface 8, using the coating 15.

The device 9, 9' including the coating 15 described above with reference to various embodiments is adapted to enabling mimetic capabilities in the visible, and possibly the near-infrared, range of wavelengths. In further variants, however, the device 9, 9' including the coating 15 may be optimized instead for an application in a mid-infrared range of wavelengths. In such a variant, the coating 15 might not necessarily be implemented as a mimetic coating, but instead might be adapted to masking at least one hot spot in emitted thermal radiation of the aircraft 1, for example in order to impede recognition. A device 9, 9' optimized in this manner makes it possible to reduce the observability of the aircraft 1 in an infrared range. If, in case of an application of the device 9, 9' to the infrared range, e.g. mid-infrared, it is not necessary or desired to detect the background 11, e.g. thermal radiation thereof, the sensing devices 12 can be omitted.

In embodiments in which it is intended to mask a hot spot in the thermal radiation, the coating 15 is not necessarily applied to the complete lower surface 8 displayed in Fig. 1 in exemplary manner. Instead, the coating 15 could be applied only to a region, in any appropriate part of the surface of the aircraft 1, which corresponds to and/or surrounds the hot spot(s).

With respect to all embodiments described above with reference to Figs. 1-6, a calibration procedure is performed before the device 9, 9' is actually put into operation, e.g. before the aircraft 1 performs a flight in camouflaged condition. In particular, such a calibration procedure may be designed for determining control signals that yield a pre-defined perceived appearance of the aircraft 1, e.g. of its lower surface portion 8, in a defined range of wavelengths such as a visible and/or infrared range.

If the device 9, 9' is configured to locally detect strain or deformation, and/or to sense external incident radiation or illumination, and to compensate for the deformation and/or change in external incident radiation/illumination, the calibration procedure can include determining appropriate corrections that may be applied to the control signal(s) in order to yield the pre-defined, intended perceived appearance. In particular, a set of pre-defined perceived colours may be linked, by the calibration procedure, to a set of control signals.

In the embodiments described above, the one or more control signals supplied to the coating 15 may be generated by the processing and control device 10 in such a way as to provide the aircraft 1 with an observable pattern that is capable of preventing the aircraft 1 from being recognized by a machine vision algorithm in the context of automated object detection or instead is capable of promoting recognition of the aircraft 1 as another, different object.

In particular, the embodiments described above can be applied to other objects instead of the aircraft 1, for example to other air, land or water vehicles like helicopters, tanks, trucks, ships or boats, or to fixed structures, e.g. buildings.

### List of reference signs

- 1: aircraft
- 2: nose
- 3: empennage
- 4: fuselage
- 5: first side (aircraft)
- 6: second side (aircraft)
- 7: upper surface portion (aircraft)
- 8: lower surface portion (aircraft)
- 9, 9': device
- 10: processing and control device
- 11: background
- 12: first sensing device
- 13: second sensing device
- 15: coating
- 16, 17: electrical signal
- 18, 19: mechanical coupling
- 20: substrate
- 21: buffer layer
- 22: actuating layer
- 23: interface layer
- 24: active layer
- 25: protective layer
- 26: matrix material
- 27: graphene flake
- 28: binding molecule
- 29: connection location
- 30: region
- 32: actuating element
- 33: elastomer
- 41: stretching movement
- 42: relative movement resulting in change of overlap

## Claims

1. Device (9; 9') for controlling reflection of incident electromagnetic radiation depending on the wavelength thereof by an object (1), in particular to thereby camouflage the object (1) at least in part, the device (9; 9') comprising a coating (15) suitable to be applied to the object (1), wherein the coating (15) includes an active layer (24) containing a multitude of small-sized structures (27) capable of producing wavelength-dependent diffraction and/or interference of electromagnetic radiation, **characterized in that** the device (9; 9') comprises an actuating layer (22) disposed beneath the active layer (24), and **in that** the actuating layer (22) comprises an elastomer (33) or a piezoceramic material, the active layer (24) being mechanically coupled to the elastomer (33) or to the piezoceramic material, wherein the device (9; 9') is configured in such a manner that, depending on one or more control signals supplied to the actuating layer (22), an arrangement of the small-sized structures (27) relative to each other can be varied.

2. Device according to claim 1,
**characterized in that** the device (9; 9') is configured for controlling the reflection of incident electromagnetic radiation in a visible range of wavelengths or in a visible and near-infrared range of wavelengths, in order to thereby change a perceived color of the object (1) or part thereof based on the one or more control signals, in particular to thereby change the perceived color locally and dynamically.

3. Device (9; 9') for reducing the observability of an object (1) or at least part thereof in an infrared range of electromagnetic radiation, the device (9; 9') comprising a coating (15) suitable to be applied to the object (1), wherein the coating (15) includes an active layer (24) containing a multitude of small-sized structures (27) capable of producing wavelength-dependent diffraction and/or interference of electromagnetic radiation, **characterized in that** the device (9; 9') comprises an actuating layer (22) disposed beneath the active layer (24), and **in that** the actuating layer (22) comprises an elastomer (33) or a piezoceramic material, the active layer (24) being mechanically coupled to the elastomer (33) or to the piezoceramic material, wherein the device (9; 9') is configured in such a manner that, depending on one or more control signals supplied to the actuating layer (22), an arrangement of the small-sized structures (27) relative to each other can be varied.

4. Device according to at least one of the preceding claims,
**characterized in that** the small-sized structures (27) are flake-like elements and **in that** the active layer (24) comprises a matrix material (26), in particular a polymer, the flake-like elements (27) being embedded in the matrix material (26).

5. Device according to at least one of the preceding claims,
**characterized in that** the small-sized structures (27) are graphene flakes.

6. Device according to at least one of the preceding claims,
**characterized in that** the device (9; 9') includes a plurality of actuating elements (32) configured to locally vary the relative arrangement of the small-sized structures (27) in different regions (30) of the coating (15) depending on the one or more control signals, in particular to thereby control one or more dielectric and/or optical properties of the active layer (24) in each of the regions (30) of the coating (15), the actuating elements (32) preferably being arranged according to an ordered pattern, array or tiling.

7. Device according to at least one of the preceding claims,
**characterized in that** the actuating layer (22) comprises a plurality of individually controllable actuating elements (32), and in particular **in that** each of the actuating elements (32) is formed with a portion of the elastomer (33) or embedded in the elastomer (33) or formed with a portion of the piezoceramic material.

8. Device according to at least one of the preceding claims,
**characterized in that** the small-sized structures (27) are each connected to the actuating layer (22) or to an interface layer (23) arranged between the active layer (24) and the actuating layer (22) by one or more binding molecules (28), wherein a binding molecule (28) extends from an associated one of the small-sized structures (27) within the active layer (24) to the actuating layer (22) or the interface layer (23).

9. Device according to at least one of the preceding claims,
**characterized in that** the active layer (24) contains controllable actuating elements, and in particular **in that** the controllable actuating elements are embedded in the matrix material (26) of the active layer (24).

10. Device according to at least one of the preceding claims,
**characterized in that** the device (9; 9') is adapted to provide one or more monitoring signals that are useable or can be processed to provide data useable in monitoring structural health of the object (1).

11. Device according to at least one of the preceding claims, **characterized in that**
the device (9; 9') is configured to sense a deformation of the object (1) or part (20) thereof and/or to compensate a variation of the arrangement of the small-sized structures (27) relative to each other caused by a deformation of the object (1) or part (20) thereof by adapting the one or more control signals; and/or **in that**
the device (9; 9') is configured to compensate a variation of external electromagnetic radiation incident on the coating (15) by adapting the one or more control signals.

12. Device according to at least one of the preceding claims,
further comprising a buffer layer (21) for partially decoupling the active layer (24) from the object (1) with respect to mechanical deformation, in particular essentially decoupling the active layer (24) from the object (1) with regard to mechanical vibration within a pre-defined frequency range, the buffer layer (21) being arranged beneath the active layer (24) or beneath the actuating layer (22).

13. Aircraft or spacecraft (1), comprising a coating (15) provided on an outer surface (8) of the aircraft or spacecraft (1), wherein the coating (15) includes an active layer (24) containing a multitude of small-sized structures (27) capable of producing wavelength-dependent diffraction and/or interference of electromagnetic radiation, **characterized in that** said aircraft or spacecraft (1) comprises an actuating layer (22) disposed beneath the active layer (24), and **in that** the actuating layer (22) comprises an elastomer (33) or a piezoceramic material, the active layer (24) being mechanically coupled to the elastomer (33) or to the piezoceramic material, wherein an arrangement of the small-sized structures (27) relative to each other is variable depending on one or more control signals supplied to the actuating layer (22).

14. Aircraft or spacecraft according to claim 13,
further comprising
at least one sensing device (12) configured to receive electromagnetic radiation incident on a first side of the aircraft or spacecraft (1) at least within a range of wavelengths and to provide at least one sensor signal dependent on the radiation received; and
a processing and control device (10) configured to receive the at least one sensor signal from the sensing device (12) and to provide the control signal dependent on the received sensor signal;
wherein at least a part of the coating (15) is disposed on a second side (6) of the aircraft or spacecraft (1) that is different from the first side (5) and in particular is substantially opposite the first side (5).

## Patentansprüche

1. Vorrichtung (9; 9') zum Steuern der Reflexion von einfallender elektromagnetischer Strahlung in Abhängigkeit von deren Wellenlänge durch ein Objekt (1), um insbesondere dadurch das Objekt (1) zumindest teilweise zu tarnen, wobei die Vorrichtung (9; 9') eine Beschichtung (15) umfasst, die auf das Objekt (1) aufgetragen werden kann, wobei die Beschichtung (15) eine Aktivschicht (24) einschließt, die eine Mehrzahl kleiner Strukturen (27) enthält, die in der Lage sind, wellenlängenabhängige Beugung und/oder Interferenz von elektromagnetischer Strahlung zu erzeugen, **dadurch gekennzeichnet, dass** die Vorrichtung (9; 9') eine Betätigungsschicht (22) umfasst, die unter der Aktivschicht (24) angeordnet ist, und dass die Betätigungsschicht (22) ein Elastomer (33) oder ein piezokeramisches Material umfasst, wobei die Aktivschicht (24) mechanisch mit dem Elastomer (33) oder dem piezokeramischen Material gekoppelt ist, wobei die Vorrichtung (9; 9') auf eine solche Art und Weise konfiguriert ist, dass, in Abhängigkeit von einem oder mehreren Steuersignalen, die an die Betätigungsschicht (22) geliefert werden, eine Anordnung der kleinen Strukturen (27) relativ zueinander variiert werden kann.

2. Vorrichtung nach Anspruch 1,
**dadurch gekennzeichnet, dass** die Vorrichtung (9; 9') zum Steuern der Reflexion von einfallender elektromagnetischer Strahlung in einem sichtbaren Bereich von Wellenlängen oder in einem sichtbaren und Nahinfrarot-Bereich von Wellenlängen konfiguriert ist, um dadurch eine wahrgenommene Farbe des Objekts (1) oder eines Teils davon basierend auf dem einen oder den mehreren Steuersignalen zu ändern, insbesondere, um dadurch die wahrgenommene Farbe lokal und dynamisch zu ändern.

3. Vorrichtung (9; 9') zum Reduzieren der Beobachtbarkeit eines Objekts (1) oder zumindest eines Teils davon in einem Infrarotbereich elektromagnetischer Strahlung, wobei die Vorrichtung (9; 9') eine Beschichtung (15) umfasst, die auf das Objekt (1) aufgetragen werden kann, wobei die Beschichtung (15) eine Aktivschicht (24) einschließt, die eine Mehrzahl kleiner Strukturen (27) enthält, die in der Lage sind, wellenlängenabhängige Beugung und/oder Interferenz von elektromagnetischer Strahlung zu erzeugen, **dadurch gekennzeichnet, dass** die Vorrichtung (9; 9') eine Betätigungsschicht (22) umfasst, die unter der Aktivschicht (24) angeordnet ist, und dass die Betätigungsschicht (22) ein Elastomer (33) oder ein piezokeramisches Material umfasst, wobei die Aktivschicht (24) mechanisch mit dem Elastomer (33) oder dem piezokeramischen Material gekoppelt ist, wobei die Vorrichtung (9; 9') auf eine solche Art und Weise konfiguriert ist, dass, in Abhängigkeit von einem oder mehreren Steuersignalen, die an die Betätigungsschicht (22) geliefert werden, eine Anordnung der kleinen Strukturen (27) relativ zueinander variiert werden kann.

4. Vorrichtung nach mindestens einem der vorstehenden Ansprüche,
**dadurch gekennzeichnet, dass** die kleinen Strukturen (27) flockenartige Elemente sind und dass die Aktivschicht (24) ein Matrixmaterial (26) umfasst, insbesondere ein Polymer, wobei die flockenartigen Elemente (27) in das Matrixmaterial (26) eingebettet sind.

5. Vorrichtung nach mindestens einem der vorstehenden Ansprüche,
**dadurch gekennzeichnet, dass** die kleinen Strukturen (27) Graphenflocken sind.

6. Vorrichtung nach mindestens einem der vorstehenden Ansprüche,
**dadurch gekennzeichnet, dass** die Vorrichtung (9; 9') eine Vielzahl von Betätigungselementen (32) beinhaltet, die dazu konfiguriert sind, die relative Anordnung der kleinen Strukturen (27) in unterschiedlichen Gebieten (30) der Beschichtung (15) in Abhängigkeit von dem einen oder den mehreren Steuersignalen lokal zu variieren, um insbesondere dadurch eine oder mehrere dielektrische und/oder optische Eigenschaften des Aktivschicht (24) in jedem der Gebiete (30) der Beschichtung (15) zu steuern, wobei die Betätigungselemente (32) vorzugsweise gemäß einem geordneten Muster, einem Array oder einer Kachelung angeordnet sind.

7. Vorrichtung nach mindestens einem der vorstehenden Ansprüche,
**dadurch gekennzeichnet, dass** die Betätigungsschicht (22) eine Vielzahl von einzeln steuerbaren Betätigungselementen (32) umfasst, und insbesondere, dass jedes der Betätigungselemente (32) mit einem Teil des Elastomers (33) ausgebildet ist oder in das Elastomer (33) eingebettet ist oder mit einem Teil des piezokeramischen Materials ausgebildet ist.

8. Vorrichtung nach mindestens einem der vorstehenden Ansprüche,
**dadurch gekennzeichnet, dass** die kleinen Strukturen (27) jeweils mit der Betätigungsschicht (22) oder mit einer Grenzflächenschicht (23), die zwischen der Aktivschicht (24) und der Betätigungsschicht (22) angeordnet ist, durch ein oder mehrere Bindemoleküle (28) verbunden sind, wobei sich ein Bindemolekül (28) von einer assoziierten der kleinen Strukturen (27) in der Aktivschicht (24) zu der Betätigungsschicht (22) oder der Grenzflächenschicht (23) erstreckt.

9. Vorrichtung nach mindestens einem der vorstehenden Ansprüche,
**dadurch gekennzeichnet, dass** die Aktivschicht (24) steuerbare Betätigungselemente enthält, und insbesondere, dass die steuerbaren Betätigungselemente in das Matrixmaterial (26) der Aktivschicht (24) eingebettet sind.

10. Vorrichtung nach mindestens einem der vorstehenden Ansprüche,
**dadurch gekennzeichnet, dass** die Vorrichtung (9; 9') dazu eingerichtet ist, ein oder mehrere Überwachungssignale bereitzustellen, die nutzbar sind oder verarbeitet werden können, um Daten bereitzustellen, die bei der Überwachung des strukturellen Gesundheitszustands des Objekts (1) nutzbar sind.

11. Vorrichtung nach mindestens einem der vorstehenden Ansprüche,
**dadurch gekennzeichnet, dass**
die Vorrichtung (9; 9') dazu konfiguriert ist, eine Verformung des Objekts (1) oder eines Teils (20) davon zu erfassen und/oder eine Variation der Anordnung der kleinen Strukturen (27) relativ zueinander, die durch eine Verformung des Objekts (1) oder eines Teils (20) davon verursacht wird, zu kompensieren, indem das eine oder die mehreren Steuersignale angepasst werden; und/oder dass
die Vorrichtung (9; 9') dazu konfiguriert ist, eine Variation externer elektromagnetischer Strahlung, die auf die Beschichtung (15) einfällt, zu kompensieren, indem das eine oder die mehreren Steuersignale angepasst werden.

12. Vorrichtung nach mindestens einem der vorstehenden Ansprüche,
ferner umfassend eine Pufferschicht (21) zum partiellen Entkoppeln der Aktivschicht (24) vom Objekt (1) bezüglich mechanischer Verformung, insbesondere im Wesentlichen Entkoppeln der Aktivschicht (24) vom Objekt (1) hinsichtlich mechanischer Vibration in einem vordefinierten Frequenzbereich, wobei die Pufferschicht (21) unter der Aktivschicht (24) oder unter der Betätigungsschicht (22) angeordnet ist.

13. Luftfahrzeug oder Raumfahrzeug (1), das eine Beschichtung (15) umfasst, die an einer Außenfläche (8) des Luftfahrzeugs oder Raumfahrzeugs (1) bereitgestellt ist, wobei die Beschichtung (15) eine Aktivschicht (24) beinhaltet, die eine Mehrzahl kleiner Strukturen (27) enthält, die wellenlängenabhängige Beugung und/oder Interferenz von elektromagnetischer Strahlung erzeugen können, **dadurch gekennzeichnet, dass** das Luftfahrzeug oder Raumfahrzeug (1) eine Betätigungsschicht (22) umfasst, die unter der Aktivschicht (24) angeordnet ist, und dass die Betätigungsschicht (22) ein Elastomer (33) oder ein piezokeramisches Material umfasst, wobei die Aktivschicht (24) mechanisch mit dem Elastomer (33) oder dem piezokeramischen Material gekoppelt ist, wobei eine Anordnung der kleinen Strukturen (27) relativ zueinander in Abhängigkeit von einem oder mehreren Steuersignalen, die an die Betätigungsschicht (22) geliefert werden, variabel ist.

14. Luftfahrzeug oder Raumfahrzeug nach Anspruch 13, ferner umfassend
mindestens eine Erfassungsvorrichtung (12), die dazu konfiguriert ist, elektromagnetische Strahlung, die auf eine erste Seite des Luftfahrzeugs oder Raumfahrzeugs (1) einfällt, zumindest in einem Bereich von Wellenlängen zu empfangen und mindestens ein Sensorsignal in Abhängigkeit von der empfangenen Strahlung bereitzustellen; und
eine Verarbeitungs- und Steuervorrichtung (10), die dazu konfiguriert ist, das mindestens eine Sensorsignal von der Erfassungsvorrichtung (12) zu empfangen und das Steuersignal in Abhängigkeit vom empfangenen Sensorsignal bereitzustellen;
wobei zumindest ein Teil der Beschichtung (15) auf einer zweiten Seite (6) des Luftfahrzeugs oder Raumfahrzeugs (1) angeordnet ist, die sich von der ersten Seite (5) unterscheidet, und insbesondere im Wesentlichen gegenüber der ersten Seite (5) angeordnet ist.

## Revendications

1. Dispositif (9; 9') de commande de la réflexion d'un rayonnement électromagnétique incident en fonction de sa longueur d'onde par un objet (1), en particulier pour ainsi camoufler l'objet (1) au moins en partie, le dispositif (9; 9') comportant un revêtement (15) approprié pour une application à l'objet (1), le revêtement (15) comprenant une couche active (24) contenant une multitude de structures (27) de petite taille capables de produire une diffraction et/ou un brouillage dépendant de la longueur d'onde d'un rayonnement électromagnétique, **caractérisé en ce que** le dispositif (9; 9') comporte une couche (22) d'actionnement disposée sous la couche active (24), et **en ce que** la couche (22) d'actionnement comporte un élastomère (33) ou un matériau piézo-céramique, la couche active (24) étant couplée mécaniquement à l'élastomère (33) ou au matériau piézo-céramique, le dispositif (9; 9') étant configuré de telle manière qu'il soit possible, en fonction d'un ou de plusieurs signaux de commande fournis à la couche (22) d'actionnement, de faire varier un agencement des structures (27) de petite taille l'une par rapport à l'autre.

2. Dispositif selon la revendication 1,
**caractérisé en ce que** le dispositif (9; 9') est configuré pour commander la réflexion d'un rayonnement électromagnétique incident dans une plage visible de longueurs d'onde ou dans une plage de longueurs d'onde visible et de proche infrarouge, afin de changer ainsi une couleur perçue de l'objet (1) ou d'une partie de celui-ci sur la base du signal ou des signaux de commande, en particulier pour changer ainsi localement et dynamiquement la couleur perçue.

3. Dispositif (9; 9') de réduction de l'observabilité d'un objet (1) ou d'au moins une partie de celui-ci dans une plage infrarouge d'un rayonnement électromagnétique, le dispositif (9; 9') comportant un revêtement (15) approprié pour une application à l'objet (1), le revêtement (15) comprenant une couche active (24) contenant une multitude de structures (27) de petite taille capables de produire une diffraction et/ou un brouillage dépendant de la longueur d'onde d'un rayonnement électromagnétique, **caractérisé en ce que** le dispositif (9; 9') comporte une couche (22) d'actionnement disposée sous la couche active (24), et **en ce que** la couche (22) d'actionnement comporte un élastomère (33) ou un matériau piézo-céramique, la couche active (24) étant couplée mécaniquement à l'élastomère (33) ou au matériau piézo-céramique, le dispositif (9; 9') étant configuré de telle manière qu'il soit possible, en fonction d'un ou de plusieurs signaux de commande fournis à la couche (22) d'actionnement, de faire varier un agencement des structures (27) de petite taille l'une par rapport à l'autre.

4. Dispositif selon au moins une des revendications précédentes,
**caractérisé en ce que** les structures (27) de petite taille sont des éléments semblables à des paillettes et **en ce que** la couche active (24) comporte un matériau (26) de matrice, en particulier un polymère, les éléments (27) semblables à des paillettes étant incorporés dans le matériau (26) de matrice.

5. Dispositif selon au moins une des revendications précédentes,
**caractérisé en ce que** les structures (27) de petite taille sont des paillettes de graphène.

6. Dispositif selon au moins une des revendications précédentes,
**caractérisé en ce que** le dispositif (9; 9') comprend une pluralité d'éléments (32) d'actionnement configurés pour faire varier localement l'agencement relatif des structures (27) de petite taille dans différentes régions (30) du revêtement (15) sur la base du signal ou des signaux de commande, en particulier pour commander ainsi une ou plusieurs propriétés diélectriques et/ou optiques de la couche active (24) dans chacune des régions (30) du revêtement (15), les éléments (32) d'actionnement étant de préférence agencés selon un motif, un réseau ou un pavage ordonné.

7. Dispositif selon au moins une des revendications précédentes,
**caractérisé en ce que** la couche (22) d'actionnement comporte une pluralité d'éléments (32) d'actionnement commandables individuellement, et en particulier **en ce que** chacun des éléments (32) d'actionnement est formé avec une partie de l'élastomère (33), ou incorporé dans l'élastomère (33), ou formé avec une partie du matériau piézo-céramique.

8. Dispositif selon au moins une des revendications précédentes,
**caractérisé en ce que** chacune des structures (27) de petite taille est liée à la couche (22) d'actionnement ou à une couche (23) d'interface agencée entre la couche active (24) et la couche (22) d'actionnement par une ou plusieurs molécules (28) de liaison, une molécule (28) de liaison s'étendant d'une structure associée parmi les structures (27) de petite taille à l'intérieur de la couche active (24) jusqu'à la couche (22) d'actionnement ou à la couche (23) d'interface.

9. Dispositif selon au moins une des revendications précédentes,
**caractérisé en ce que** la couche active (24) contient des éléments d'actionnement commandables, et en particulier **en ce que** les éléments d'actionnement commandables sont incorporés dans le matériau (26) de matrice de la couche active (24).

10. Dispositif selon au moins une des revendications précédentes,
**caractérisé en ce que** le dispositif (9; 9') est prévu pour fournir un ou plusieurs signaux de surveillance qui sont utilisables ou peuvent être traités pour fournir des données utilisables dans la surveillance de l'intégrité structurale de l'objet (1).

11. Dispositif selon au moins une des revendications précédentes,
**caractérisé en ce que**
le dispositif (9; 9') est configuré pour détecter une déformation de l'objet (1) ou d'une partie (20) de celui-ci et/ou pour compenser une variation de l'agencement des structures (27) de petite taille l'une par rapport à l'autre causée par une déformation de l'objet (1) ou d'une partie (20) de celui-ci en adaptant le signal ou les signaux de commande ; et/ou **en ce que**
le dispositif (9; 9') est configuré pour compenser une variation d'un rayonnement électromagnétique externe incident sur le revêtement (15) en adaptant le signal ou les signaux de commande.

12. Dispositif selon au moins une des revendications précédentes,
comportant en outre une couche tampon (21) servant à découpler partiellement la couche active (24) de l'objet (1) par rapport à une déformation mécanique, en particulier à découpler essentiellement la couche active (24) de l'objet (1) par rapport à une vibration mécanique à l'intérieur d'une plage de fréquences prédéfinie, la couche tampon (21) étant agencée sous la couche active (24) ou sous la couche (22) d'actionnement.

13. Aéronef ou engin spatial (1), comportant un revêtement (15) placé sur une surface extérieure (8) de l'aéronef ou de l'engin spatial (1), le revêtement (15) comprenant une couche active (24) contenant une multitude de structures (27) de petite taille capables de produire une diffraction et/ou un brouillage dépendant de la longueur d'onde d'un rayonnement électromagnétique, **caractérisé en ce que** ledit aéronef ou ledit engin spatial (1) comporte une couche (22) d'actionnement disposée sous la couche active (24), et **en ce que** la couche (22) d'actionnement comporte un élastomère (33) ou un matériau piézo-céramique, la couche active (24) étant couplée mécaniquement à l'élastomère (33) ou au matériau piézo-céramique, un agencement des structures (27) de petite taille l'une par rapport à l'autre étant variable en fonction d'un ou de plusieurs signaux de commande fournis à la couche (22) d'actionnement.

14. Aéronef ou engin spatial selon la revendication 13, comportant en outre
au moins un dispositif (12) de détection configuré pour recevoir un rayonnement électromagnétique incident sur un premier côté de l'aéronef ou de l'engin spatial (1) au moins à l'intérieur d'une plage de longueurs d'onde et pour fournir au moins un signal de capteur en fonction du rayonnement reçu ; et
un dispositif (10) de traitement et de commande configuré pour recevoir le signal ou les signaux de capteur en provenance du dispositif (12) de détection et pour fournir le signal de commande en fonction du signal de capteur reçu ;
au moins une partie du revêtement (15) étant disposée sur un second côté (6) de l'aéronef ou de l'engin spatial (1) qui est différent du premier côté (5) et, en particulier, est sensiblement opposé au premier côté (5).
